# EUROPEAN PATENT SPECIFICATION

(11) **EP 2 824 965 B1**
(45) Date of publication and mention of the grant of the patent: **31.08.2016**
(21) Application number: 14153027.9
(22) Date of filing: 29.01.2014
(51) Int. Cl.: H04W 48/06, H04W 84/12, H04W 36/00, H04W 4/02

(54) **Communication device and communication system**
Kommunikationsvorrichtung und Kommunikationssystem
Système de communication et dispositif de communication

(30) Priority: 08.07.2013 JP 2013142722
(43) Date of publication of application: 14.01.2015
(73) Proprietor: Kabushiki Kaisha Toshiba, Tokyo 105-8001 (JP)
(72) Inventor: Watanabe, Hiroyuki, Tokyo, 105-8001 (JP); Namba, Yoshiki, Tokyo, 105-8001 (JP); Iida, Yasutaka, Tokyo, 105-8001 (JP)
(74) Representative: Hoffmann Eitle

(56) References cited:
- GB-A- 2 387 074
- US-A1- 2010 085 947

## Description

### FIELD

Embodiments described herein relate generally to a communication device and a communication system.

### BACKGROUND

Recently, public wireless LAN services have been widespread in stations, airports, public areas such as rest areas, restaurants, commercial facilities, exhibition halls, or the like. Accordingly, services aiming for an improvement in user convenience by delivering various kinds of information such as advertisements, operation information, and exhibition information using a wireless LAN, have been becoming popular.

In such services, it is effective to deliver information at places most appropriate for users to use the information, and information needs to be delivered in a limited specific area such as in front of a store. Further, it is necessary to deliver a large amount of information such as high-quality video or image information attracting the users of the information other than text or information of a still image having a small amount of information. To this end, a large amount of information has to be efficiently delivered in a short time during which a user of the information in movement stays at a limited specific area.

Under this circumstance, using a wireless LAN (IEEE 802.11) that is commonly being used in the world, it takes several seconds to start content delivery between a terminal and an access point (hereinafter, referred to as an "AP"), and thus there is a problem in that information may be unlikely to be delivered while the information user stays within the specific area. Further, in order to perform information delivery in a wide area in which information can be delivered to the information user, output of an AP needs to be increased, and thus, in this case, there is a problem in that energy efficiency is lowered as well.

GB 2 387 074 A relates to a mobile device used to effect task-related communication with a remote entity via the communications infrastructure of a wireless hotspot through which the mobile device is moving. The device includes a first estimation arrangement for estimating the time remaining before the mobile device leaves the coverage zone of the hotspot having regard to the predicted movement of the device. The device further includes a second estimation arrangement for estimating the time needed to complete the task-related communication. These two time estimates are compared with each other by a monitor unit of the device to determine whether there is sufficient time to complete the task-related communication.

US 2010/085947 A1 discloses communicating by wireless communication conforming to a GSM but fails to disclose communicating by wireless communication conforming to the IEEE 802.11 standard.

### BRIEF DESCRIPTION OF THE DRAWINGS

FIG. 1 is a diagram illustrating a basic configuration of a wireless communication system according to one embodiment;
FIG. 2 is a diagram illustrating configurations of an AP and a terminal in the wireless communication system according to one embodiment;
FIG. 3 is a flowchart for describing a terminal registration process according to one embodiment;
FIG. 4 is a diagram illustrating terminal information according to one embodiment;
FIG. 5 is a diagram for describing a timing at which a terminal comes under control of an AP in operations of the AP and the terminal at the time of passive scan, according to one embodiment;
FIG. 6 is a flowchart for describing a content delivery process of a terminal connection determining unit, according to one embodiment;
FIG. 7 is a diagram for describing estimation of a remaining time up to an optimal connection, according to one embodiment;
FIG. 8 is a flowchart for describing the content delivery process of the terminal connection determining unit, according to one embodiment;
FIG. 9 is a diagram illustrating an overall configuration of a system and internal configurations of a gate, a sensor, and a video server in an example in which a video server estimates the position of a terminal using a gate/sensor, according to one embodiment;
FIG. 10 is a diagram for describing operation processes of devices when the position of a terminal is detected using a plurality of APs and a video server side estimates a current position of the terminal using a detection result of an acceleration sensor of the terminal as sensing information, according to one embodiment;
FIG. 11A is a diagram for describing a setting of configuration information, according to one embodiment; and
FIG. 11B is a diagram illustrating exemplary configuration information, according to one embodiment.

### DETAILED DESCRIPTION

The above problem is solved by the subject-matter of the independent claims. The dependent claims describe advantageous embodiments.

In general, a communication device comprises a first transmission and reception processing unit, a second transmission and reception processing unit, a terminal information managing unit, and a terminal connection determining unit. The communication device is connected with a plurality of terminals via a wireless line and delivers content stored in an external device connected to the communication device via a wired line to the terminals. The first transmission and reception processing unit performs a connection process with respect to at least one of the terminals in order to deliver the content stored in the external device. The second transmission and reception processing unit performs communication with the external device. The terminal information managing unit identifies each of the terminals, and stores and manages terminal information representing a delivery status of the content with respect to the each of the terminals. The terminal connection determining unit determines, from among a plurality of terminals in which terminal information is managed in the terminal information managing unit and to which the content has not been delivered yet, a terminal that is to perform the connection process through the first transmission and reception processing unit based on estimation values of remaining times during which the each of the terminals is able to stay in a communication area connectable via the wireless line.

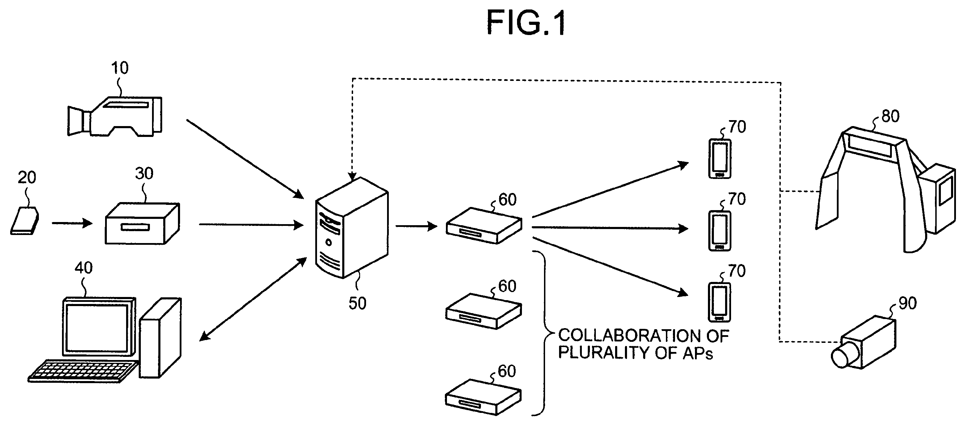

FIG. 1 is a diagram illustrating a basic configuration of a wireless communication system according to one embodiment.

A video camera 10 and a video recording medium 20 illustrated in FIG. 1 are devices for inputting content (video) to a reproduction deck 30. The reproduction deck 30 reproduces the content input from the video camera 10 or the video recording medium 20, and outputs the content to a video server 50. A content editor 40 is a device for editing the content input to the video server 50, and the video server 50 holds edited final content. Of course, the edited content may be input from the content editor 40 to the video recording medium 20, and in this case, the edited final content is held in the video server 50 through the video recording medium 20 and the reproduction deck 30.

Wireless communication conforming to the wireless LAN standard (which is herein the IEEE 802.11 standard, but the wireless LAN standard is not limited thereto) is performed between an AP 60 and a terminal 70. After a connection is established between the AP 60 and the terminal 70, necessary content is delivered from the video server 50 to the terminal 70 being moving through the AP 60.
In the present embodiment, for identification of the terminal 70, a MAC address thereof is first registered, and the registered terminal 70 becomes a content delivery target. Further, since the terminal 70 staying in a specific area is a content delivery target, in order to accurately detect the position of the terminal 70, there may be used a method in which the video server 50 specifies the position of the terminal 70, for example, based on a reception level (power) or a transmission time difference of a signal that is transmitted from the terminal 70 and received by each of a plurality of APs 60 by a triangulation technique or the like or a method in which the video server 50 detects the position of the terminal 70 or the position of the terminal user based on a detection result of a gate 80 or a sensor 90 such as a camera which is capable of detecting that the terminal 70 has passed through a specific position. In both cases, notification on the position information of the terminal 70 specified by the video server 50 side is given to the AP 60, and the position information is used at the AP 60 side.

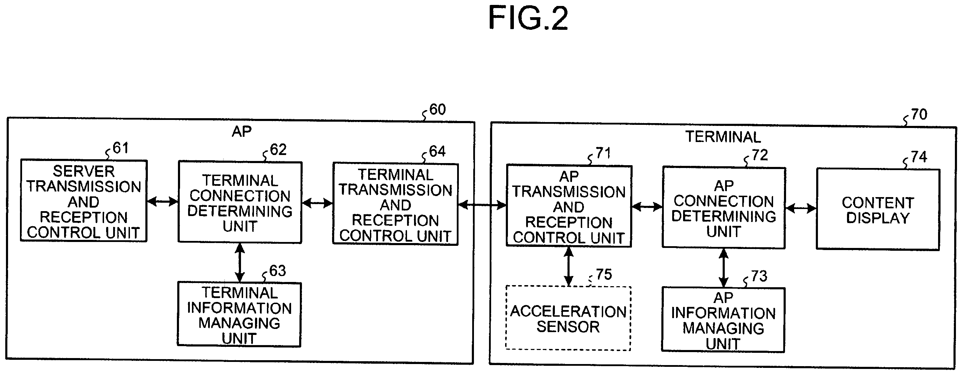

FIG. 2 illustrates configurations of the AP 60 and the terminal 70 in the wireless communication system according to the present embodiment.

The AP 60 implements content delivery of delivering content of the video server 50 to the terminal 70 through a server transmission and reception control unit 61 that performs wireless or wired communication with the video server 50 via the Ethernet (a registered trademark) or the like and a terminal transmission and reception control unit 64 that performs transmission and reception control by wireless communication conforming to the IEEE 802.11 standard with the terminal 70. A terminal information managing unit 63 manages information (terminal information) related to each terminal 70, and a terminal connection determining unit 62 determines whether content delivery to the terminal 70 is to be performed based on the information.

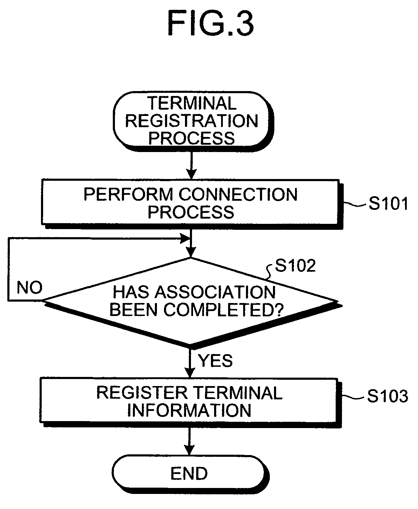

In the present embodiment, the terminal 70 serving as the content delivery target is registered in the AP 60 as described above. For registration, the terminal transmission and reception control unit 64 performs a connection process with respect to the terminal 70 (S101), and after association is completed (Yes in S102), the terminal information managing unit 63 sets and registers identification information (here, a MAC address) of the terminal 70 as terminal information (S103), as illustrated in FIG. 3. Through this process, the terminal 70 serving as the content delivery target is registered in the AP 60. Further, when a plurality of APs 60 collaborate, the identification information of the terminal 70 registered to any one of the APs 60 is delivered and registered in the other APs 60.

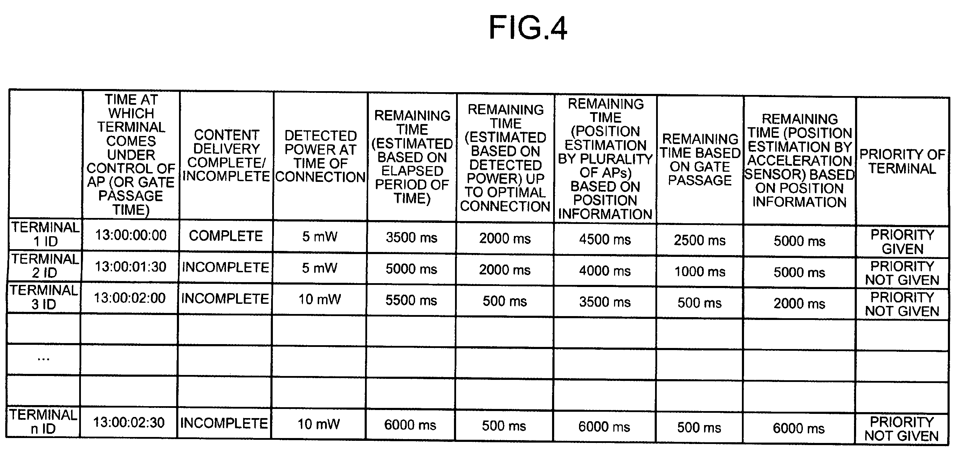

The terminal information that is information related to the terminal 70 includes: (1) the identification information (here, the MAC address) of the terminal 70; and information representing a status of the terminal 70. The information representing the status of the terminal 70 includes: (2A) content delivery complete/incomplete; (2B) a time at which the terminal 70 comes under control of an AP (or a gate passage time) or/and a level (detected power at the time of connection) of a signal when an authentication request is received from the terminal 70; and (2C) information on at least one of remaining times including a remaining time that is used to determine a terminal 70 (which will be described later) to which content is delivered and estimated based on an elapsed period of time after coming under the control of the AP, a remaining time up to an optimal connection having certain power or more, which is estimated based on detected power at the time of connection, a remaining time (a remaining time based on position information) estimated based on position information when the position of the terminal 70 is estimated by a plurality of the APs 60, a remaining time based on gate passage, and a remaining time (a remaining time based on position information) estimated based on position information when the position (or displacement) of the terminal 70 is estimated using an acceleration sensor 75. The terminal information also includes information representing whether a terminal is given a priority for when a process is performed with respect to the terminal to which the priority is given, which will be described later, is performed. FIG. 4 is a diagram illustrating all contents of the terminal information described above.

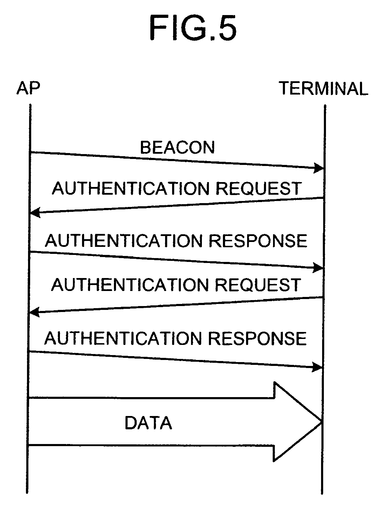

Here, "under control of an AP" refers to a state in which the AP 60 has received the authentication request from the terminal 70 in response to a transmitted beacon (starting the connection process) and then established a wireless connection with the terminal 70 as illustrated in FIG. 5. Further, a previously set AP control time refers to a time experimentally decided for a time until the terminal user moves and comes out from the area and so the terminal 70 is not under the control of the AP after the terminal user enters the specific area and so the terminal 70 is under the control of the AP. Further, an AP control remaining time refers to a time (estimation value) remaining until the terminal 70 comes out from under the control of the AP after a point in time (or position) in which the terminal 70 comes under the control of the AP.

Next, the terminal 70 will be described. The terminal 70 includes an AP transmission and reception control unit 71 that controls wireless communication with the AP 60 and a content display 74 that displays content, and receives and displays content. The terminal 70 manages a service set identifier (SSID) of the AP 60 through an AP information managing unit 73, and starts the connection process through an AP connection determining unit 72 based on the status with the AP 60. The process conforms to the IEEE 802.11 standard. Further, in order to specify the position (or displacement) of the terminal 70 by itself or in order to specify the position of the terminal 70 by the video server 50 (which will be described later), the terminal 70 may optionally include the acceleration sensor 75. In case of specifying the position of the terminal 70 by the video server 50, the terminal 70 transmits the detection result of the acceleration sensor 75 in the terminal 70 to the AP 60 as sensing information through the AP transmission and reception control unit 71. The present embodiment has been described in connection with the example in which the video server 50 specifies the position of the terminal 70, but another external device may specify the position of the terminal 70 instead of the video server 50. Further, the terminal 70 performs only reception of content and may have a configuration including no content display 74.

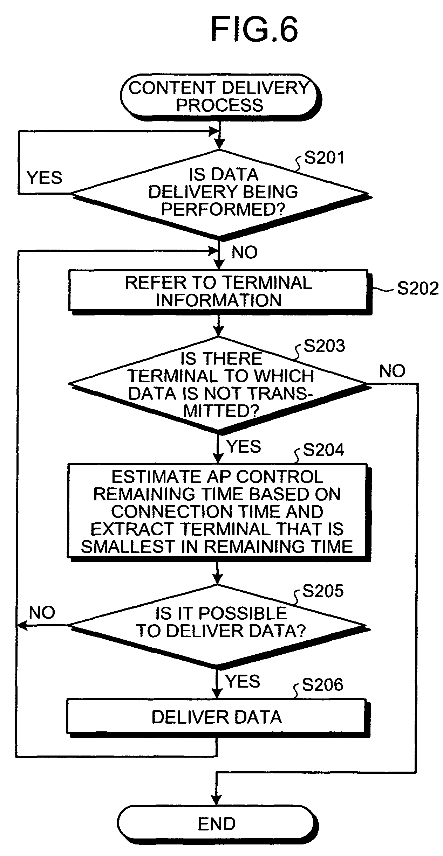

Next, a content delivery process of the terminal connection determining unit 62 of the AP 60 will be described. FIG. 6 is a flowchart for describing a first embodiment of the content delivery process of the terminal connection determining unit 62.

First, when the terminal 70 comes under the control of the AP, the AP 60 determines whether content delivery is being performed (data delivery is being performed). At this time, when data delivery is not being performed (No in S201), terminal information is referred to (S202).

At this time, when there is a terminal 70 to which content has not been delivered yet (the terminal to which data is not transmitted yet) (Yes in S203), the process proceeds to the next step, S204. However, when there is no terminal to which data has not been transmitted yet (No in S203), the process ends.

In S204, the AP control remaining time is estimated based on a period of time during which the terminal 70 to which content has not been delivered yet has been connected to the AP 60 (an elapsed period of time after the terminal comes under the control of the AP), and the terminal 70 that is smallest in the remaining time is extracted. Specifically, a result of subtracting an elapsed period of time after a time at which the terminal 70 to which content has not been delivered yet comes under the control of the AP from a previously set AP control time is reflected in the terminal information as the AP control remaining time, and the terminal 70 that is smallest in the remaining time is extracted.

Then, if the remaining time is enough to perform and complete the content delivery, it is determined that data delivery can be performed (Yes in S205), and the content delivery (data delivery) is performed (S206). However, if the remaining time is not enough, it is determined that it is difficult to perform data delivery (No in S205), the terminal information is referred to again (S202), and S203 and subsequent processes are performed on another registered terminal 70. Further, the time enough to perform and complete content delivery is decided according to a radio wave condition of a corresponding communication area or the like.

Through the above process, it is possible to deliver content to the terminal 70 that is smallest in the AP control remaining time and to which content needs to be delivered with the highest priority.

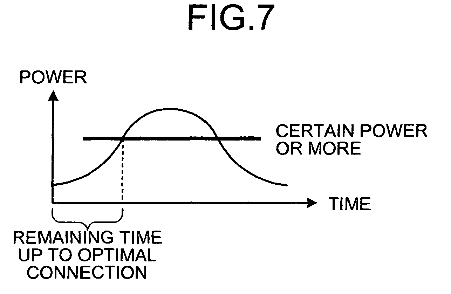

In the first embodiment of the content delivery process of the terminal connection determining unit 62, in S204, the AP control remaining time is estimated based on a period of time in which the terminal 70 is connected to the AP 60 (an elapsed period of time after the terminal comes under the control of the AP), and the terminal 70 that is smallest in the remaining time is extracted. However, as another embodiment of the content delivery process of the terminal connection determining unit 62, in S204, the remaining time up to an optimal connection having certain power (reception level) or more may be estimated from detected power at the time of connection, and the terminal 70 that is the smallest in the remaining time may be extracted (a second embodiment; in this embodiment, since a content delivery speed can be increased, it is possible to complete content delivery earlier). Furthermore, after the video server 50 estimates the position of the terminal 70 based on the reception level of the signal received from the terminal 70 by a plurality of APs 60 as described above, the AP 60 may estimate the AP control remaining time based on the position information, and the terminal 70 that is smallest in the remaining time may be extracted (a third embodiment). Furthermore, it may be detected that the terminal 70 has passed through a specific place (that is, the position of the terminal 70 may be detected) in collaboration with the gate 80 and/or the sensor 90 installed at a specific position. Then, the AP control remaining time may be estimated based on the detection result, and the terminal 70 that is the smallest in the remaining time may be extracted (a fourth embodiment). Furthermore, the AP control remaining time may be estimated based on the position (or displacement) estimated based on the detection result of the acceleration sensor 75 of the terminal 70, and the terminal 70 that is the smallest in the remaining time may be extracted (a fifth embodiment). In the second embodiment, the remaining time up to the optimal connection may be estimated, for example, based on transition pattern (for example, FIG. 7) of the reception level that is experimentally obtained. Further, in the third to fifth embodiments, for example, the remaining time may be estimated using the AP control remaining time experimentally obtained for each position (or specific position) or displacement in a specific area in which the terminal 70 is under the control of the AP. In these embodiments, experimentally obtained information is managed by the terminal connection determining unit 62.

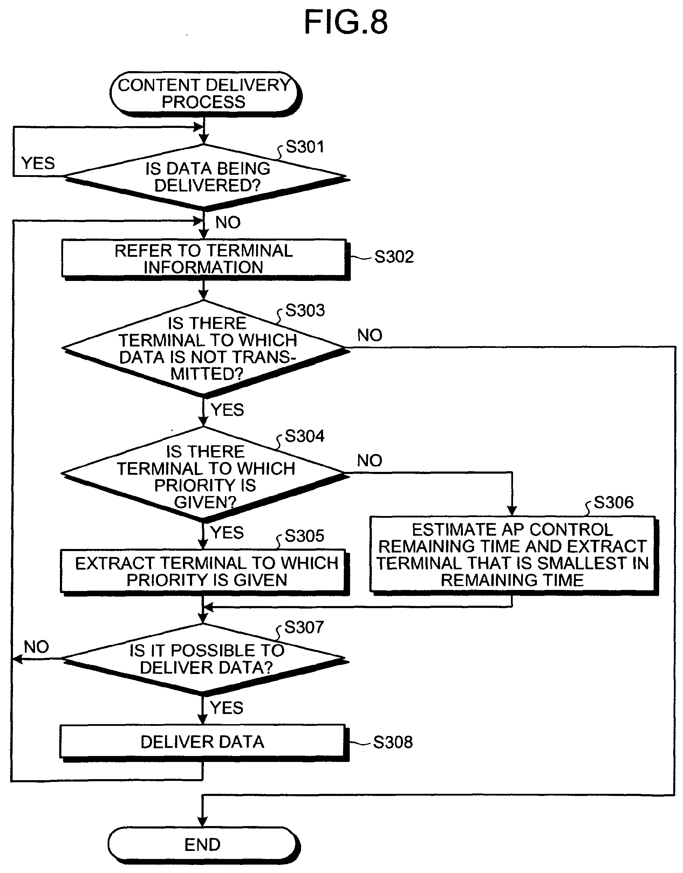

Next, a sixth embodiment of the content delivery process of the terminal connection determining unit 62 will be described. FIG. 8 is a flowchart for describing the sixth embodiment of the content delivery process of the terminal connection determining unit 62.

The process of S301 to S303 and S306 to S308 in the flowchart illustrated in FIG. 8 is the same as the process of S201 to S203 and S204 to S206 in the flowchart illustrated in FIG. 6. Differences are in S304 and S305, and in S304, the presence or absence of the terminal to which the priority is given is determined. When a terminal to which priority is given (also referred to as priority terminal) is included in the terminal information referred to in S302 (Yes in S304), in step S305, the priority terminal (specifically, the MAC address thereof) is extracted. However, when no priority terminal is included (No in S304), the same process as S204 (the first to fifth embodiments) is performed. The remaining portions are similar to the process described with reference to FIG. 6, and thus a description thereof will not be provided. As described above, in the present embodiment, content is delivered to the terminal 70 set as the priority terminal with the highest priority. Further, when there are a plurality of priority terminals, it is preferable that a priority for content delivery be given to a priority terminal that is the smallest in the AP control remaining time as described in the first to fifth examples.

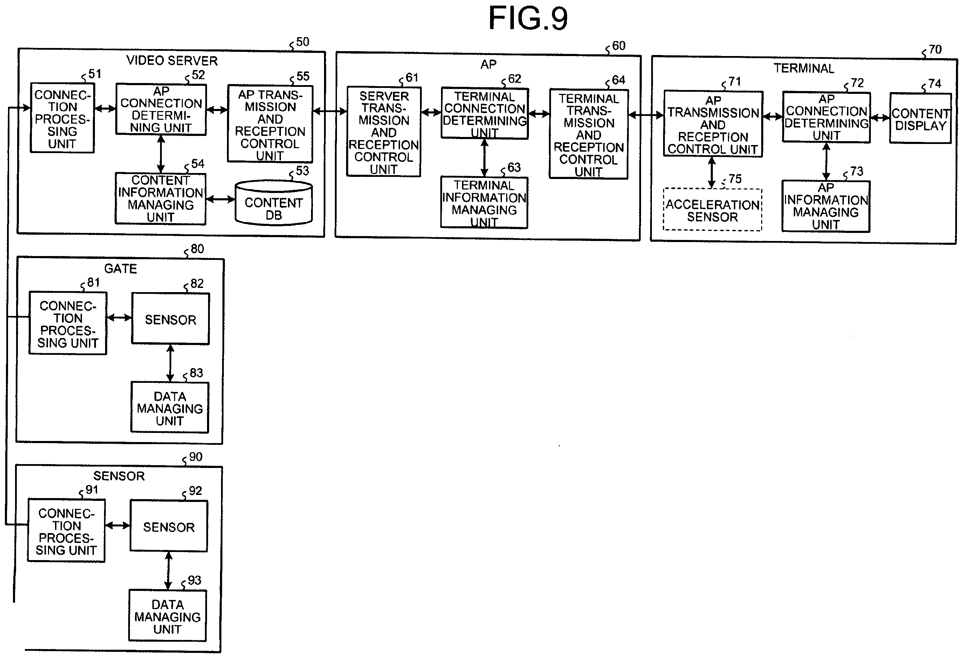

Next, an overall configuration of a system in the embodiment (the fourth embodiment) in which the video server 50 estimates the position of the terminal 70 using the gate 80 and/or the sensor 90 will be described with reference to FIG. 9 together with internal configurations of the gate 80, the sensor 90, and the video server 50. The AP 60 and the terminal 70 have the above-described configurations.

The gate 80 includes: a connection processing unit 81 that performs wired or wireless communication with the video server 50; a sensor 82 that detects that the terminal 70 passes through the gate 80; and a data managing unit 83 that manages information (the MAC address of the terminal 70 and information for detecting the terminal 70) identifying the terminal 70. Upon detecting that the terminal 70 passes through the gate 80, the sensor 82 acquires the MAC address of the terminal 70 from the data managing unit 83 based on the detection result, and notifies the video server 50 of the MAC address of the passed terminal 70 through the connection processing unit 81. Through this operation, the video server 50 can recognize that the terminal 70 has passed through the gate 80. A technique of detecting the terminal 70 through the sensor 82 is arbitrary.

The sensor 90 includes a connection processing unit 91 that performs wired or wireless communication with the video server 50, a sensor 92 that detects an object used by the user of the terminal 70 or the terminal user, and a data managing unit 93 that manages information (the MAC address of the terminal 70 and information for detecting the user and the like of the terminal 70) identifying the terminal 70. For example, when the sensor 92 is a camera, the user of the terminal 70 or an object (for example, a license plate of a vehicle) is identified based on information for detecting the user of the terminal 70 or the like which is information identifying the user of the terminal 70 or the object using a known image recognition technique. Through this operation, the sensor 90 detects that the terminal 70 enters a specific area. Then, the sensor 92 acquires the identification information (the MAC address) of the terminal 70 from a data managing unit 93 based on the detection result, and notifies the video server 50 of the MAC address of the passed terminal 70 through the connection processing unit 91. Through this operation, the video server 50 can recognize that the terminal 70 has entered the specific area.

The video server 50 includes: a connection processing unit 51 that performs communication with the gate 80/the sensor 90; an AP connection determining unit 52 that performs a process of notifying the AP 60 of the position information of the terminal 70 based on the detection result by the gate 80/the sensor 90 and the content delivery process; a content DB 53 that stores content data; a content information managing unit 54 that manages the content DB 53; and an AP transmission and reception control unit 55 that performs wired or wireless communication with the AP 60. Further, when a plurality of APs 60 are used, the AP connection determining unit 52 decides the AP 60 used to perform the content delivery to the terminal 70, gives the above notification to the decided AP 60 through the AP transmission and reception control unit 55, and performs the content delivery process through the AP 60.

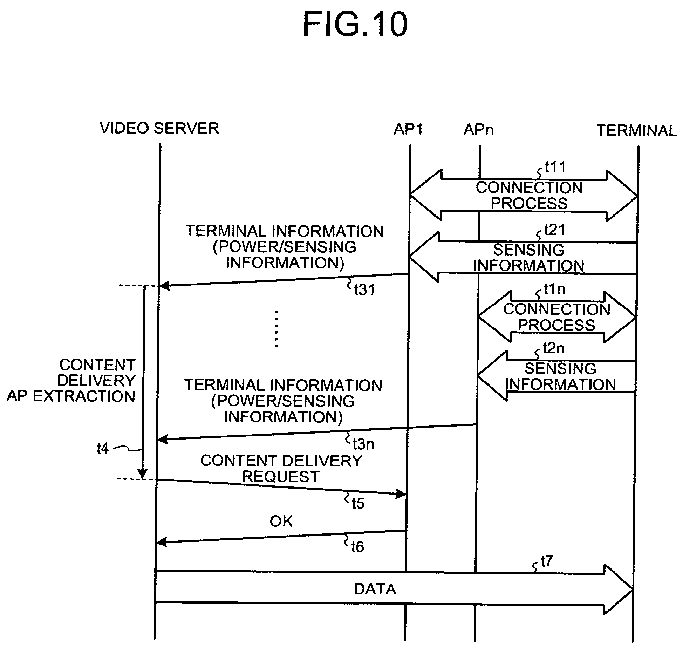

Here, operation processes of the respective devices when the position of the terminal 70 is detected using a plurality of APs 60 (AP1 and APn in FIG. 10) (the third embodiment) and the video server 50 estimates the current position of the terminal 70 using the detection result of the acceleration sensor 75 of the terminal 70 as sensing information will be described with reference to FIG. 10.

The terminal 70 and the APs 60 (AP1 and APn) perform a predetermined connection process according to the IEEE 802.11 standard.

After connections between the APs 60 and the terminal 70 are established (t11 and t1n), the terminal 70 transmits the detection result of the acceleration sensor 75 to the APs 60 (AP1 and APn) as sensing information (t21 and t2n). For example, the sensing information is transmitted to the APs 60 at regular time intervals.

For example, the APs 60 (AP1 and APn) transmit the reception level (power) and the sensing information to the video server 50 as connection terminal information for the terminal 70 at regular time intervals (t31).

When the video server 50 receives the connection terminal information from the APs 60 (AP1 and APn), the AP connection determining unit 52 calculates the initial position of the terminal 70 based on the reception level using the known triangulation/trilateration technique or the like, estimates the current position based on sensing information (here, the detection result of the acceleration sensor 75 of the terminal 70) by a known technique, and extracts the AP 60 optimal to perform the content delivery, for example, extracts preferentially the AP 60 closest to the position of the terminal 70 (t4). Further, in the present embodiment, the AP connection determining unit 52 of the video server 50 is assumed to hold the position information of each AP 60 or the like in association with the MAC address of each AP 60 in order to calculate the position of the terminal 70.

Then, the video server 50 transmits a content delivery request including the MAC address of the terminal 70 and the calculated position information to the AP 60 (AP1 in FIG. 10) extracted at t4 (t5).

Upon receiving an OK response from the AP 60 (AP1 in FIG. 10) (t6), the video server 50 performs content delivery to the terminal 70 through the AP 60 (t7).

Further, when there are a plurality of terminals 70, to which content is not delivered yet, which are registered to the AP 60, the connection terminal information of each terminal 70 to which content is not delivered yet is transmitted to the video server 50, and the video server 50 performs the above process on each connection terminal information. Further, the AP 60 transmits the OK response when the AP control remaining time of the terminal 70 estimated by the AP 60 based on the position information of the terminal 70 from the video server 50 is smallest as illustrated in FIG. 10.

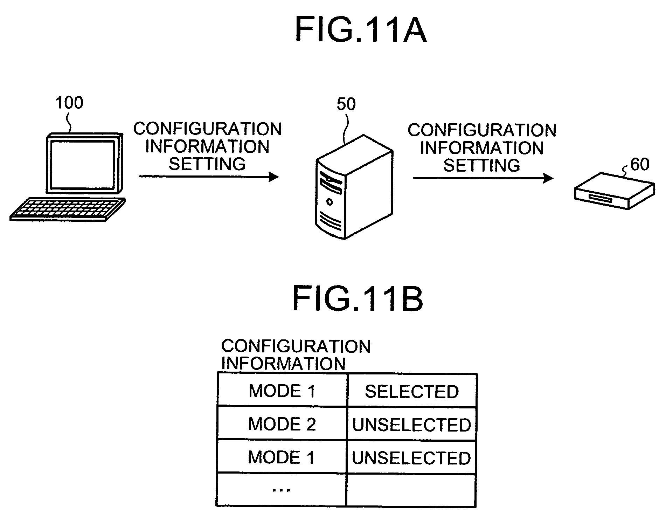

Meanwhile, the content delivery process of the terminal connection determining unit 62 may be performed by two or more methods as described above in the first to sixth embodiments. Thus, it is preferable to designate an operation performed in the content delivery process of the terminal connection determining unit 62. FIG. 11A is a diagram illustrating an exemplary configuration in which configuration information designating selection/non-selection of modes (operation mode) corresponding to operations in the first to sixth examples can be set to the AP 60 by the video server 50. FIG. 11B illustrates exemplary configuration information. The configuration information is configured such that a selected operation mode can be recognized by the AP 60.

In the system configuration illustrated in FIG. 11A, a video server setting terminal 100 sets configuration information to the video server 50 in advance. When the AP 60 is activated, the AP 60 acquires the configuration information from the video server 50 at that timing, and sets the configuration information to its own device. Thereafter, the AP 60 operates in the operation mode designated by the configuration information. The configuration information may be set to the AP 60 at a timing designated by the video server setting terminal 100 as well as when the AP 60 is activated. Further, instead of setting the configuration information, a command designating an operation mode may be transmitted from an external device.

As described above, according to the above embodiment, content is delivered to the terminal 70 to which content needs to be delivered with the highest priority in terms of time during a period of time in which the information user stays within the specific area, and thus a large amount of information can be delivered to the terminal 70 used by the information user.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the scope of the inventions. The accompanying claims and their equivalents are intended to cover such forms or modifications as would fall within the scope of the inventions.

## Claims

1. A communication device (60) that is connected with a plurality of terminals (70) via a wireless line and delivers content stored in an external device (50) connected to the communication device via a wired line to the terminals (70),
**characterized in that**
the communication device comprising:
a first transmission and reception processing unit (64) that performs a connection process with respect to at least one of the terminals (70) in order to deliver the content stored in the external device (50);
a second transmission and reception processing unit (61) that performs communication with the external device (50) ;
a terminal information managing unit (63) that identifies each of the terminals (70), and stores and manages terminal information representing a delivery status of the content with respect to the each of the terminals (70); and
a terminal connection determining unit (62) that determines, from among a plurality of terminals (70) in which terminal information is managed in the terminal information managing unit (63) and to which the content has not been delivered yet, a terminal that is to perform the connection process through the first transmission and reception processing unit (64) based on estimation values of remaining times during which the each of the terminals is able to stay in a communication area connectable via the wireless line, wherein
the first transmission and reception processing unit (64) and the second transmission and reception processing unit (61) deliver the content stored in the external device (50) to the terminal(70).

2. The communication device according to claim 1, wherein the terminal connection determining unit (62) estimates the remaining times during which the each of the terminals is able to stay in the communication area of the communication device connectable via the wireless line, based on elapsed periods of time after the each of the terminals starts performing the connection process with the communication device (60).

3. The communication device according to claim 1, wherein the terminal connection determining unit (62) receives position information of the each of the terminals that is calculated based on a reception level of a received signal from the each of the terminals that performs the connection process through the first transmission and reception processing unit (64) and a reception level of a received signal from the each of the terminal which is received by other communication device (60), and estimates the remaining times during which the each of the terminals is able to stay in the communication area of the communication device connectable via the wireless line based on the received position information.

4. The communication device according to claim 1, wherein the terminal connection determining unit (62) receives position information of the each of the terminals based on a detection result of a gate (80) or a sensor (90) that detects that the each of the terminals enters the communication area connectable via the wireless line, and estimates remaining times during which the each of the terminals is able to stay in the communication area of the communication device (60) connectable via the wireless line based on the received position information.

5. The communication device according to claim 1, wherein the terminal connection determining unit (62) estimates a position or displacement of the each of the terminals based on a detection result of an acceleration sensor (75) provided in the each of the terminals from the each of the terminals, and estimates remaining times during which the each of the terminals is able to stay in the communication area of the communication device connectable via the wireless line based on information of the position or the displacement.

6. A communication device (60) that is connected with a plurality of terminals (70) via a wireless line and delivers content stored in an external device (50) connected to the communication device via a wired line to the terminals (70),
**characterized in that**
the communication device comprising:
a first transmission and reception processing unit (64) that performs a connection process with respect to at least one of the terminals (70) in order to deliver content stored in the external device (50);
a second transmission and reception processing unit (61) that performs communication with the external device (50);
a terminal information managing unit (63) that identifies each of the terminals (70), and stores and manages terminal information representing a delivery status of the content with respect to the each of the terminals (70); and
a terminal connection determining unit (62) that determines, from among a plurality of terminals (70) in which terminal information is managed in the terminal information managing unit (63) and to which the content has not been delivered yet, a terminal that is to perform the connection process through the first transmission and reception processing unit (64) based on reception levels of signals from the each of the terminals, wherein
the first transmission and reception processing unit (64) and the second transmission and reception processing unit (61) deliver the content stored in the external device (50) to the terminal(70).

7. The communication device according to claim 1 or 6, wherein
the terminal information managing unit (63) stores information in which priority for performing content delivery is set, and,
when there is a terminal (70) whose terminal information indicating that the priority is given is stored in the terminal information managing unit (63), the terminal connection determining unit (62) determines, from among a plurality of terminals (70) to which the content has not been delivered yet, the terminal as a terminal with respect to which the content delivery is to be performed.

8. The communication device according to claim 1, wherein the terminal connection determining unit (62) performs, based on a command or configuration information specifying which operation is to be performed when determining a terminal with respect to which the content delivery is to be performed:
an operation of estimating the remaining times during which the each of the terminals is able to stay in the communication area of the communication device (60) connectable via the wireless line based on elapsed periods of time after the each of the terminals starts the connection process with the communication device (60);
an operation of receiving position information of the each of the terminals that is calculated based on a reception level of a received signal from the each of the terminals that performs the connection process through the first transmission and reception processing unit (64) and a reception level of a received signal from the each of the terminals which is received by other communication device (60), and estimating remaining times during which the each of the terminals is able to stay in the communication area of the communication device (60) connectable via the wireless line based on the received position information;
an operation of receiving position information of the each of the terminals based on a detection result of a gate (80) or a sensor (90) that detects that the each of the terminals enters the communication area connectable via the wireless line, and estimating remaining times during which the each of the terminals is able to stay in the communication area of the communication device (60) connectable via the wireless line based on the received position information; or
an operation of estimating a position or displacement of the each of the terminals based on a detection result of an acceleration sensor (75) provided in the each of the terminals from the each of the terminals, and estimating remaining times during which the each of the terminals is able to stay in the communication area of the communication device (60) connectable via the wireless line based on information of the position or the displacement.

9. A communication system comprising:
the communication device (60) according to any one of claims 1 to 8; and
the external device that stores therein the content.

## Patentansprüche

1. Eine Kommunikationsvorrichtung (60), welche mit einer Vielzahl von Endgeräten (70) über eine drahtlose Leitung verbunden ist und einen Inhalt, welcher auf einer mit der Kommunikationsvorrichtung über eine Kabelleitung verbundenen externen Vorrichtung (50) gespeichert ist, an die Endgeräte (70) zustellt, **dadurch gekennzeichnet, dass**
die Kommunikationsvorrichtung umfasst:
eine erste Übertragungs- und Empfangsverarbeitungseinheit (64), welche einen Verbindungsprozess mit Bezug zu zumindest einem der Endgeräte (70) ausführt, um den auf der externen Vorrichtung (50) gespeicherten Inhalt zuzustellen;
eine zweite Übertragungs- und Empfangsverarbeitungseinheit (61), welche eine Kommunikation mit der externen Vorrichtung (50) ausführt;
eine Endgeräteinformationsverwaltungseinheit (63), welche jedes der Endgeräte (70) identifiziert und eine Endgeräteinformation speichert und verwaltet, welche einen Zustellstatus des Inhalts mit Bezug zu jedem der Endgeräte (70) wiedergibt; und
eine Endgeräteverbindungsbestimmungseinheit (62), welche aus einer Vielzahl von Endgeräten (70), bei welchen eine Endgeräteinformation in der Endgeräteinformationsverwaltungseinheit (63) verwaltet ist und zu welcher der Inhalt noch nicht zugestellt wurde, ein Endgerät bestimmt, welches die Verbindungsverarbeitung über die erste Übertragungs- und Empfangsverarbeitungseinheit (64) auszuführen hat, basierend auf Schätzwerten von Verbleibezeiten, während welchen es jedem der Endgeräte möglich ist, in einem über die drahtlose Leitung verbindbaren Kommunikationsbereich zu verbleiben, wobei
die erste Übertragungs- und Empfangsverarbeitungseinheit (64) und die zweite Übertragungs- und Empfangsverarbeitungseinheit (61) den auf der externen Vorrichtung (50) gespeicherten Inhalt an das Endgerät (70) zustellen.

2. Kommunikationsvorrichtung gemäß Anspruch 1, wobei die Endgeräteverbindungsbestimmungseinheit (62) die Verbleibezeiten, während welchen es jedem der Endgeräte möglich ist, in dem mit der drahtlosen Leitung verbindbaren Kommunikationsbereich der Kommunikationsvorrichtung zu verbleiben, basierend auf verstrichenen Zeitperioden, nachdem jedes der Endgeräte beginnt, den Verbindungsprozess mit der der Kommunikationsvorrichtung (60) auszuführen, abschätzt.

3. Kommunikationsvorrichtung gemäß Anspruch 1, wobei die Endgeräteverbindungsbestimmungseinheit (62) eine Positionsinformation eines jeden der Endgeräte, welche basierend auf einem Empfangsniveau eines Empfangssignals von einem jeden der Endgeräte, welches den Verbindungsprozess ausführt, berechnet ist, über die erste Übertragungs- und Empfangsverarbeitungseinheit (64), und ein Empfangsniveau eines Empfangssignals von einem jeden der Endgeräte, welches durch eine andere Kommunikationsvorrichtung (60) empfangen ist, empfängt und die Verbleibezeiten, während welchen es jedem der Endgeräte möglich ist, in dem über die drahtlose Verbindung verbindbaren Kommunikationsbereich der Kommunikationsvorrichtung zu verbleiben, basierend auf der empfangenen Positionsinformation abschätzt.

4. Kommunikationsvorrichtung gemäß Anspruch 1, wobei die Endgeräteverbindungsbestimmungseinheit (62) eine Positionsinformation von jedem der Endgeräte basierend auf einem Detektionsergebnis einer Schranke (80) oder eines Sensors (90) empfängt, welche detektieren, dass jedes der Endgeräte den über die drahtlose Leitung verbindbaren Kommunikationsbereich eintritt, und Verbleibezeiten, während welchen es jedem der Endgeräte möglich ist, in dem über die drahtlose Leitung verbindbaren Kommunikationsbereich der Kommunikationsvorrichtung (60) zu verbleiben, basierend auf der empfangenen Positionsinformation abschätzt.

5. Kommunikationsvorrichtung gemäß Anspruch 1, wobei die Endgeräteverbindungsbestimmungseinheit (62) eine Position oder eine Verschiebung von jedem der Endgeräte basierend auf einem Detektionsergebnis eines Beschleunigungssensors (75), welcher in jedem der Endgeräte vorgesehen ist, von jedem der Endgeräte abschätzt und Verbleibezeiten, während welchen es jedem der Endgeräte möglich ist, in dem über die drahtlose Leitung verbindbaren Kommunikationsbereich der Kommunikationsvorrichtung zu verbleiben, basierend auf einer Positions- oder Verschiebungsinformation abschätzt.

6. Eine Kommunikationsvorrichtung (60), welche mit einer Vielzahl von Endgeräten (70) über eine drahtlose Leitung verbunden ist und einen Inhalt, welcher auf einer mit der Kommunikationsvorrichtung über eine Kabelleitung verbundenen externen Vorrichtung (50) gespeichert ist, an die Endgeräte (70) zustellt,
**dadurch gekennzeichnet, dass**
die Kommunikationsvorrichtung umfasst:
eine erste Übertragungs- und Empfangsverarbeitungseinheit (64), welche einen Verbindungsprozess mit Bezug zu zumindest einem der Endgeräte (70) ausführt, um einen auf der externen Vorrichtung (50) gespeicherten Inhalt zuzustellen;
eine zweite Übertragungs- und Empfangsverarbeitungseinheit (61), welche eine Kommunikation mit der externen Vorrichtung (50) ausführt;
eine Endgeräteinformationsverwaltungseinheit (63), welche jedes der Endgeräte (70) identifiziert und eine Endgeräteinformation speichert und verwaltet, welche einen Zustellstatus des Inhalts mit Bezug zu jedem der Endgeräte (70) darstellt; und
eine Endgeräteverbindungsbestimmungseinheit (62), welche aus einer Vielzahl von Endgeräten (70), bei welchen eine Endgeräteinformation in der Endgeräteinformationsverwaltungseinheit (63) verwaltet ist und zu welchem der Inhalt noch nicht zugestellt ist, ein Endgerät, welches den Verbindungsprozess über die erste Übertragungs- und Empfangsverarbeitungseinheit (64) auszuführen hat, basierend auf Empfangsniveaus von Signalen von jedem der Endgeräte bestimmt, wobei
die erste Übertragungs- und Empfangsverarbeitungseinheit (64) und die zweite Übertragungs- und Empfangsverarbeitungseinheit (61) den auf der externen Vorrichtung (50) gespeicherten Inhalt an das Endgerät (70) zustellen.

7. Kommunikationsvorrichtung gemäß Anspruch 1 oder 6, wobei die Endgeräteinformationsverwaltungseinheit (63) eine Information speichert, bei welcher eine Priorität zum Ausführen einer Inhaltszustellung eingestellt ist, und, wenn es ein Endgerät (70) gibt, deren Endgeräteinformation, welche angibt, dass die Priorität gegeben ist, auf der Endgeräteinformationsverwaltungseinheit (63) gespeichert ist, die Endgeräteverbindungsbestimmungseinheit (62) aus einer Vielzahl von Endgeräten (70), zu welchen der Inhalt noch nicht zugestellt ist, das Endgerät als ein Endgerät, bezüglich welchem die Inhaltszustellung auszuführen ist, bestimmt.

8. Kommunikationsvorrichtung gemäß Anspruch 1, wobei die Endgeräteverbindungsbestimmungseinheit (62) basierend auf einer Befehls- oder Konfigurationsinformation, welche bestimmt, welche Operation auszuführen ist, wenn ein Endgerät, bezüglich welchem die Inhaltszustellung auszuführen ist, bestimmt wird, ausführt:
eine Operation zum Abschätzen der Verbleibezeiten, während welchen es jedem der Endgeräte möglich ist, in dem über die drahtlose Leitung verbindbaren Kommunikationsbereich der Kommunikationsvorrichtung (60) zu verbleiben, basierend auf verstrichenen Zeitperioden, nach dem jedes der Endgeräte den Verbindungsprozess mit der Kommunikationsvorrichtung (60) beginnt;
eine Operation zum Empfangen von einer Positionsinformation eines jeden der Endgeräte, welche basierend auf einem Empfangsniveau eines Empfangssignals von jedem der Endgeräte, welches den Verbindungsprozess ausführt, berechnet ist, über die erste Übertragungs- und Empfangsverarbeitungseinheit (64) und eines Empfangsniveaus eines Empfangssignals von jedem der Endgeräte, welches durch eine andere Kommunikationsvorrichtung (60) empfangen ist, und zum Abschätzen von Verbleibezeiten, während welchen es jedem der Endgeräte möglich ist, in dem über die drahtlose Leitung verbindbaren Kommunikationsbereich der Kommunikationsvorrichtung (60) zu verbleiben, basierend auf der empfangenen Positionsinformation;
eine Operation zum Empfangen von einer Positionsinformation eines jeden der Endgeräte basierend auf einem Detektionsergebnis einer Schranke (80) oder eines Sensors (90), welche detektieren, dass jedes der Endgeräte in den über die drahtlose Leitung verbindbaren Kommunikationsbereich eintritt, und zum Abschätzen von Verbleibezeiten, während welchen es jedem der Endgeräte möglich ist, in dem über die drahtlose Leitung verbindbaren Kommunikationsbereich der Kommunikationsvorrichtung (60) zu verbleiben, basierend auf der empfangenen Positionsinformation; oder
eine Operation zum Abschätzen einer Position oder einer Verschiebung eines jeden der Endgeräte basierend auf einem Detektionsergebnis eines Beschleunigungssensors (75), welcher in jedem der Endgeräte vorgesehen ist, von jedem der Endgeräte und zum Abschätzen von Verbleibezeiten, während welchen es jedem der Endgeräte möglich ist, in dem über die drahtlose Leitung verbindbaren Kommunikationsbereich der Kommunikationsvorrichtung (60) zu verbleiben, basierend auf einer Information der Position oder der Verschiebung.

9. Ein Kommunikationssystem, umfassend:
die Kommunikationsvorrichtung (60) gemäß einem der Ansprüche 1 bis 8; und
die externe Vorrichtung, welche darauf den Inhalt speichert.

## Revendications

1. Dispositif de communication (60) qui est connecté à une pluralité de terminaux (70) via une liaison sans fil et délivre un contenu, stocké dans un dispositif externe (50) connecté au dispositif de communication via une ligne câblée, aux terminaux (70),
**caractérisé en ce que** :
le dispositif de communication comprend :
une première unité de traitement de transmission et de réception (64) qui effectue un processus de connexion par rapport à au moins l'un des terminaux (70) de manière à délivrer le contenu stocké dans le dispositif externe (50) ;
une deuxième unité de traitement de transmission et de réception (61) qui effectue une communication avec le dispositif externe (50) ;
une unité de gestion d'informations de terminal (63) qui identifie chacun des terminaux (70) et stocke et gère des informations de terminal représentant un état de fourniture du contenu par rapport à chacun des terminaux (70) ; et
une unité de détermination de connexion de terminal (62) qui détermine, parmi une pluralité de terminaux (70) dans lesquels des informations de terminal sont gérées dans l'unité de gestion d'informations de terminal (63) et auxquels le contenu n'a pas encore été délivré, un terminal qui doit effectuer le processus de connexion via la première unité de traitement de transmission et de réception (64) sur la base de valeurs d'estimation de temps restants durant lesquels le chacun des terminaux est en mesure de résider dans une zone de communication connectable via la liaison sans fil, dans lequel :
la première unité de traitement de transmission et de réception (64) et la deuxième unité de traitement de transmission et de réception (61) délivrent le contenu stocké dans le dispositif externe (50) au terminal (70).

2. Dispositif de communication selon la revendication 1, dans lequel l'unité de détermination de connexion de terminal (62) estime les temps restants durant lesquels le chacun des terminaux est en mesure de résider dans la zone de communication du dispositif de communication connectable via la liaison sans fil, sur la base de périodes de temps écoulées après que le chacun des terminaux commence à effectuer le processus de connexion avec le dispositif de communication (60).

3. Dispositif de communication selon la revendication 1, dans lequel l'unité de détermination de connexion de terminal (62) reçoit des informations de position du chacun des terminaux qui sont calculées sur la base d'un niveau de réception d'un signal reçu du chacun des terminaux qui effectue le processus de connexion via la première unité de traitement de transmission et de réception (64) et d'un niveau de réception d'un signal reçu du chacun des terminaux qui est reçu par un autre dispositif de communication (60), et estime les temps restants durant lesquels le chacun des terminaux est en mesure de résider dans la zone de communication du dispositif de communication connectable via la liaison sans fil sur la base des informations de position reçues.

4. Dispositif de communication selon la revendication 1, dans lequel l'unité de détermination de connexion de terminal (62) reçoit des informations de position du chacun des terminaux sur la base d'un résultat de détection d'une porte (80) ou d'un capteur (90) qui détecte que le chacun des terminaux pénètre dans la zone de communication connectable via la liaison sans fil, et estime les temps restants durant lesquels le chacun des terminaux est en mesure de résider dans la zone de communication du dispositif de communication (60) connectable via la liaison sans fil sur la base des informations de position reçues.

5. Dispositif de communication selon la revendication 1, dans lequel l'unité de détermination de connexion de terminal (62) estime une position ou un déplacement du chacun des terminaux sur la base d'un résultat de détection d'un capteur d'accélération (75) présent dans le chacun des terminaux à partir du chacun des terminaux, et estime les temps restants durant lesquels le chacun des terminaux est en mesure de résider dans la zone de communication du dispositif de communication connectable via la liaison sans fil sur la base des informations de la position ou du déplacement.

6. Dispositif de communication (60) qui est connecté à une pluralité de terminaux (70) via une liaison sans fil et délivre un contenu, stocké dans un dispositif externe (50) connecté au dispositif de communication via une ligne câblée, aux terminaux (70),
**caractérisé en ce que** :
le dispositif de communication comprend :
une première unité de traitement de transmission et de réception (64) qui effectue un processus de connexion par rapport à au moins l'un des terminaux (70) de manière à délivrer le contenu stocké dans le dispositif externe (50) ;
une deuxième unité de traitement de transmission et de réception (61) qui effectue une communication avec le dispositif externe (50) ;
une unité de gestion d'informations de terminal (63) qui identifie chacun des terminaux (70) et stocke et gère des informations de terminal représentant un état de fourniture du contenu par rapport à chacun des terminaux (70) ; et
une unité de détermination de connexion de terminal (62) qui détermine, parmi une pluralité de terminaux (70) dans lesquels des informations de terminal sont gérées dans l'unité de gestion d'informations de terminal (63) et auxquels le contenu n'a pas encore été délivré, un terminal qui doit effectuer le processus de connexion via la première unité de traitement de transmission et de réception (64) sur la base de niveaux de réception de signaux provenant de chacun des terminaux, dans lequel :
la première unité de traitement de transmission et de réception (64) et la deuxième unité de traitement de transmission et de réception (61) délivrent le contenu stocké dans le dispositif externe (50) au terminal (70).

7. Dispositif de communication selon la revendication 1 ou 6, dans lequel :
l'unité de gestion d'informations de terminal (63) stocke des informations dans lesquelles une priorité pour effectuer la fourniture de contenu est définie, et,
quand il y a un terminal (70) dont les informations de terminal indiquant que la priorité est donnée sont stockées dans l'unité de gestion d'informations de terminal (63), l'unité de détermination de connexion de terminal (62) détermine, parmi une pluralité de terminaux (70) auxquels le contenu n'a pas encore été délivré, le terminal comme un terminal par rapport auquel la fourniture de contenu doit être effectuée.

8. Dispositif de communication selon la revendication 1, dans lequel l'unité de détermination de connexion de terminal (62) effectue, sur la base d'une commande ou d'informations de configuration spécifiant quelle opération doit être effectuée quand elle détermine un terminal par rapport auquel la fourniture de contenu doit être effectuée ;
une opération d'estimation des temps restants durant lesquels le chacun des terminaux est en mesure de résider dans la zone de communication du dispositif de communication (60) connectable via la liaison sans fil, sur la base de périodes de temps écoulées après que le chacun des terminaux a commencé le processus de connexion avec le dispositif de communication (60) ; une opération de réception d'informations de position du chacun des terminaux qui est calculée sur la base d'un niveau de réception d'un signal reçu du chacun des terminaux qui effectue le processus de connexion via la première unité de traitement de transmission et de réception (64) et d'un niveau de réception d'un signal reçu du chacun des terminaux qui est reçu par un autre dispositif de communication (60), et estime les temps restants durant lesquels le chacun des terminaux est en mesure de résider dans la zone de communication du dispositif de communication (60) connectable via la liaison sans fil sur la base des informations de position reçues ;
une opération de réception d'informations de position du chacun des terminaux sur la base d'un résultat de détection d'une porte (80) ou d'un capteur (90) qui détecte que le chacun des terminaux pénètre dans la zone de communication connectable via la liaison sans fil, et d'estimation des temps restants durant lesquels le chacun des terminaux est en mesure de résider dans la zone de communication du dispositif de communication (60) connectable via la liaison sans fil sur la base des informations de position reçues ; ou
une opération d'estimation d'une position ou d'un déplacement du chacun des terminaux sur la base d'un résultat de détection d'un capteur d'accélération (75) présent dans le chacun des terminaux à partir du chacun des terminaux, et d'estimation des temps restants durant lesquels le chacun des terminaux est en mesure de résider dans la zone de communication du dispositif de communication (60) connectable via la liaison sans fil sur la base des informations de la position ou du déplacement.

9. Système de communication comprenant :
le dispositif de communication (60) selon l'une quelconque des revendications 1 à 8 ; et
le dispositif externe qui y stocke le contenu.
